# EUROPEAN PATENT SPECIFICATION

(11) **EP 1 539 412 B1**
(45) Date of publication and mention of the grant of the patent: **03.11.2010**
(21) Application number: 03795544.0
(22) Date of filing: 16.09.2003
(51) Int. Cl.: B23B 1/00

(54) **A DEVICE FOR FIXATION OF A PORTABLE DRILLING OR MILLING MACHINE ON A TEMPLATE FOR MAKING HOLES IN A WORKPIECE**
VORRICHTUNG ZUR BEFESTIGUNG EINER TRAGBAREN BOHR- ODER FRÄSMASCHINE AN EINER SCHABLONE ZUR HERSTELLUNG VON LÖCHERN IN EINEM WERKSTÜCK
DISPOSITIF DE FIXATION D'UNE PERCEUSE OU D'UNE FRAISEUSE SUR UN GABARIT POUR LE PER AGE DE TROUS DANS UNE PIECE

(30) Priority: 16.09.2002 US 410813 P
(43) Date of publication of application: 15.06.2005
(60) Divisional application: 09179782.9
(73) Proprietor: Novator AB, 163 55 Spaanga (SE)
(72) Inventor: LINDERHOLM, Dag, S-144 21 Rönninge (SE)
(74) Representative: Börlin, Maria
(86) International application number: PCT/SE2003/001445
(87) International publication number: WO 2004/024376

(56) References cited:
- EP-A1- 0 761 351
- WO-A1-01/15843
- DE-A1- 4 118 104
- DE-A1- 4 125 501
- US-A- 5 088 171
- US-B1- 6 382 890

## Description

### Background of the invention

### 1. Field of the invention

The invention relates to a device for providing an improved temporary fixation of a drilling or milling machine on a template for making holes and/or recesses at predetermined locations in a workpiece. In particular, but not exclusively, the device of the present invention is adapted to temporarily fixate a portable orbital drilling machine to a template which is mounted onto a workpiece in which holes are to be formed at locations determined by pre-formed apertures in the template.

### 2. Description of related art

WO 94/17944 and VVO 01/15870 disclose earlier embodiments of devices for fixation of a portable hand tool apparatus to a template for producing holes in a workpiece. These devices comprise a sleeve, which is attached to the template aperture by means of screw joints. This requires threaded holes to be formed in the template and separate screws therefor. Also US-B1-5088171 and DE-A1-4125501 disclose earlier embodiments of devices for fixation of a portable hand tool apparatus to a template for producing holes in a workpiece.

### Summary of the invention

An object of the present invention is to eliminate the need of screw joints when temporarily fixating a hand tool apparatus in an aperture of the template and to provide a fixation device, which facilitates and improves the attachment of the hand tool apparatus to the template.

To this end the device of the present invention for temporary fixation of a portable cutting machine to a template for making holes and/or recesses in a workpiece, comprises:
a guide sleeve having a tubular hub with an outer diameter corresponding to an inner diameter of an aperture in the template, a forward end of the hub having radially extending lugs configured and located so as to match corresponding recesses in the aperture during insertion of the guide sleeve therein and to obtain a locking engagement with an inner surface of the template after a partial rotation of the guide sleeve relative to the template, and a rearward end of the hub being connected to a tubular adapter socket to be mounted to a nose portion of the cutting machine; and
a tensioning unit mounted to the adapter socket for axial displacement relative thereto and having a forward end surface for engagement with an outer surface of the template.

Further features and details of the present invention are set forth in the following claims and will be disclosed in the following detailed description with reference to the accompanying drawings.

### Brief description of the drawings

Fig. 1 is a longitudinal sectional view of a portable hand tool apparatus attached to a template for making holes in a workpiece;
Fig. 2 is a plan view of a backside of a template having two types of apertures for receiving a guide sleeve of a fixation device of the present invention;
Fig. 3 is a cross-section of the template taken along the line 3-3 in Fig. 2;
Fig. 4 is a longitudinal cross-sectional view of the fixation device of the present invention;
Fig. 5 is a perspective view of the guide sleeve of the fixation device;
Fig. 6 is a perspective view of a hand tool apparatus to be attached to a template;
Fig. 7 is a perspective view of a hand tool apparatus attached to a template; and
Fig. 8 and 9 is a side view and a plan view, respectively, of a fixation device of the present invention attached to a curved template.

### Detailed description of a preferred embodiment

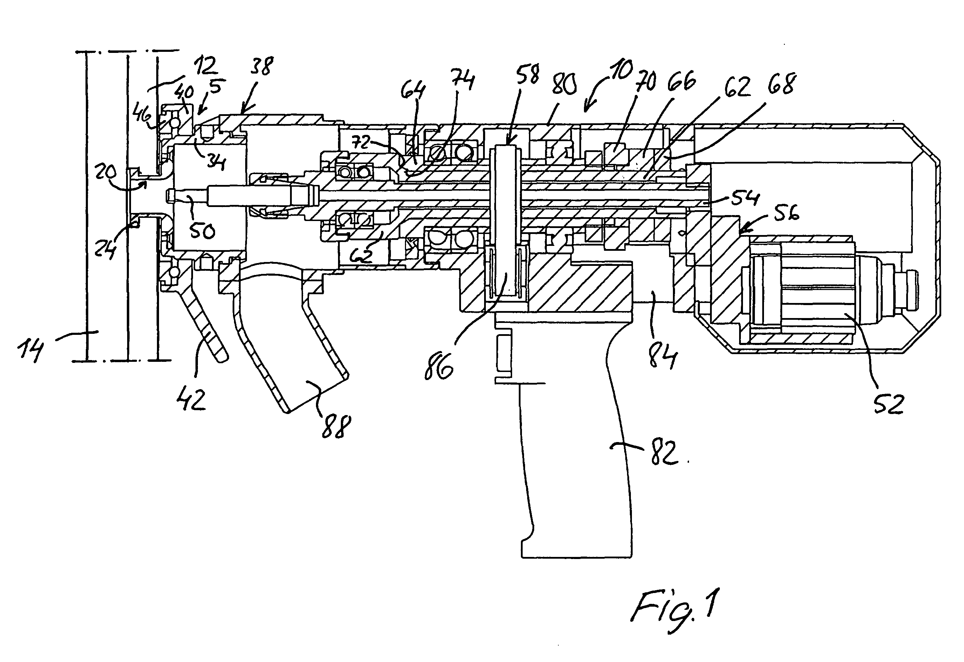

Fig. 1 illustrates a portable hand tool machine 10 for orbital drilling of holes or recesses in a workpiece 14. For temporarily fixating the machine 10 to a template 12 having apertures 16 located at spots where holes are to be formed in the workpiece a fixation device 5 of the present invention is used.

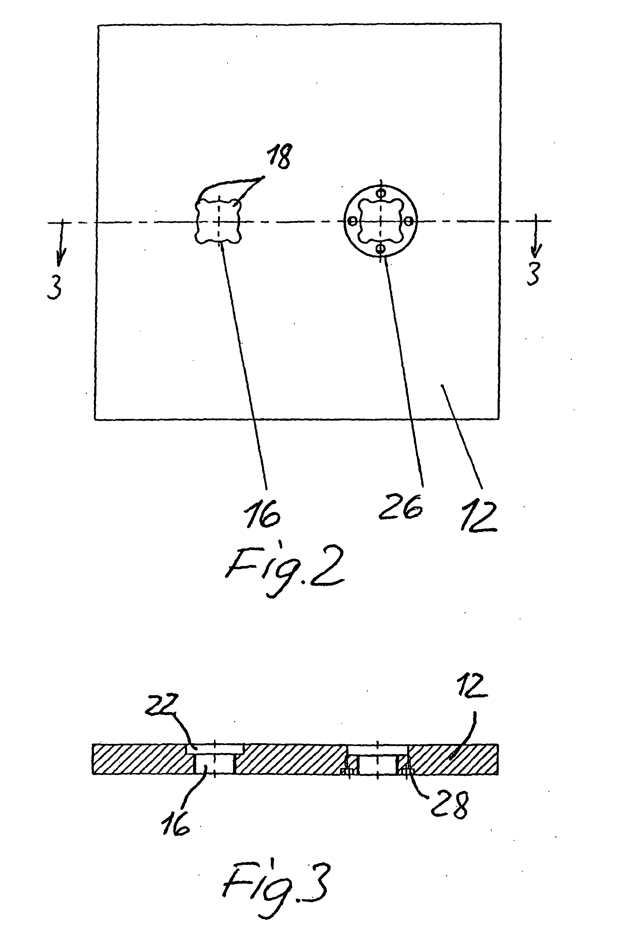

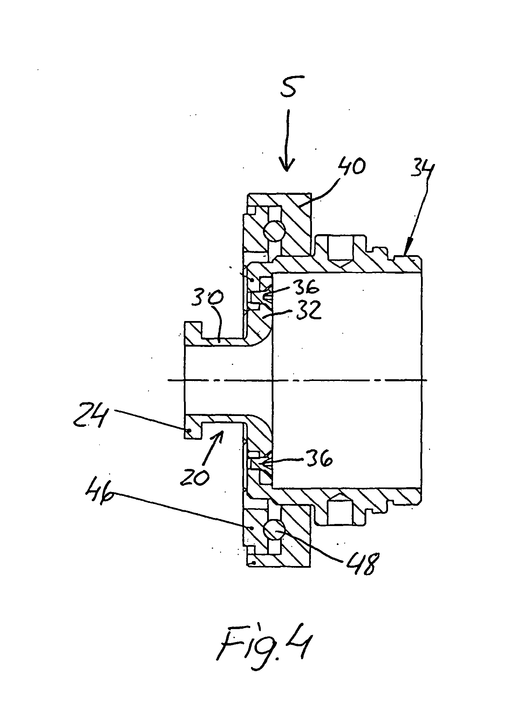

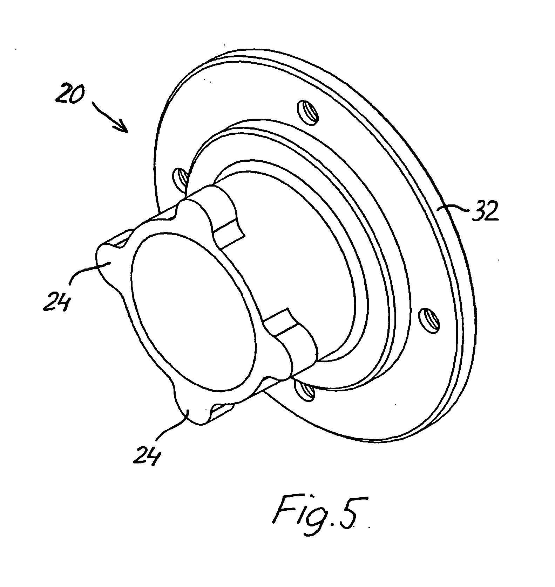

As shown to the left in Fig. 2, each aperture 16 in the template 12 may have a circular configuration with at least one, but preferably a plurality of, for example four, axial recesses or grooves 18 at the periphery of the aperture for receiving a guide sleeve 20 (Fig. 4) of the fixation device 5, which is mounted to the front end of the drilling machine 10. A recess 22 (Fig. 3) adjoins the aperture 16 on the template backside facing the workpiece for receiving correspondingly profiled protrusions or lugs 24 (Fig. 4 and 5) on the guide sleeve 20 without engaging the surface of the workpiece. Alternatively, each profiled aperture in the template 12 may be formed in a detachable insert 26 secured by threads to the template, as shown to the right in Fig. 2 and 3. The template 12 may be made of any suitable metal, plastic or composite material and can be made flat or curved in one or more directions.

As shown in Fig. 1, 4 and 5, the guide sleeve 20 of the fixation device 5 has a tubular hub 30 with an outer diameter corresponding accurately to the inner diameter of the aperture 16. The forward end of the hub 30 has four protrusions or lugs 24 configured and located to match the grooves 18, and at the rearward end of the hub 30 there is a base plate 32 to which is mounted an adapter or fixture socket 34 by means of screws 36. The socket 34 is mounted to a nose portion 38 of the drilling machine 10. A tension ring 40 having three turning wings 42 is threaded onto the outer periphery of the socket 34 and engages a pressure plate 46, which is configured to rest against the outer surface of the template 12 and is axially and rotatably supported relative to the tension ring 40 by means of a bearing 48. In case of a template having a curved outer surface, such as a spherically curved surface, the pressure plate 46 may comprise three or more pressure elements (not shown) which are individually articulated by ball joints so as to be automatically adjustable to the inclination of the surface of the template.

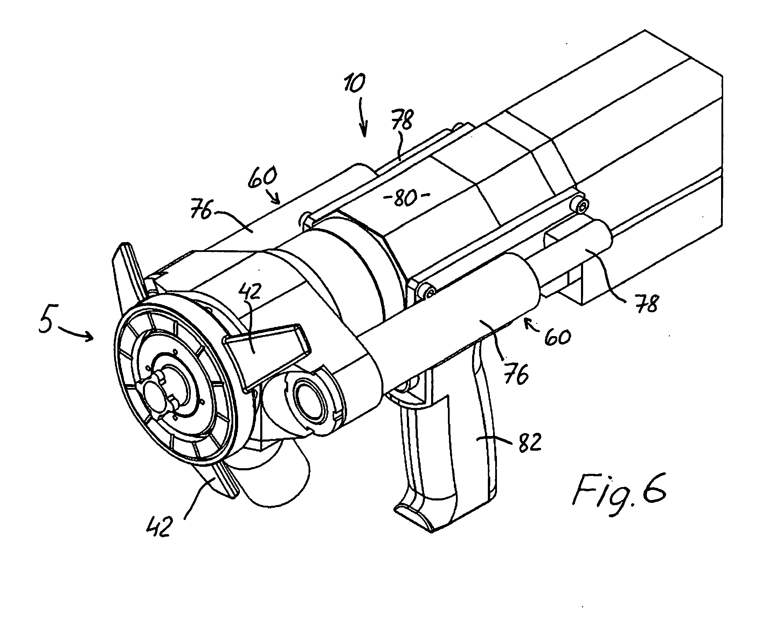

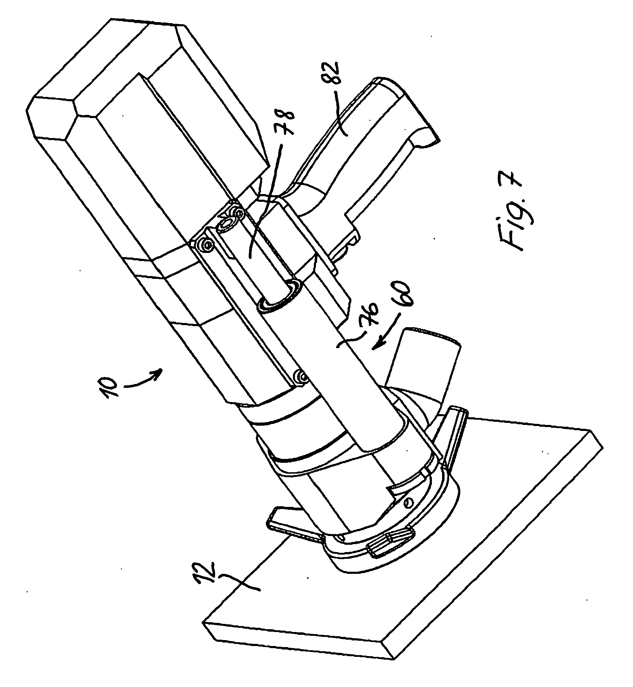

Fig. 6 is a perspective view of a portable orbital drilling machine 10 to which is attached a fixation device 5 of the present invention, and Fig. 7 shows the machine 10 mounted to a template 12. When mounting the machine 10 (or the fixation device 5 separately) to the template 12 for making an accurate hole in the workpiece, the guide sleeve 20 of the fixation device 5 is axially inserted through the aperture 16 and then turned 45° so that the lugs 24 will come into a locking engagement with the backside of the template 12. In order to obtain a stable and accurate fixation of the machine 10 to the template 12 the tension ring 40 is turned with help of the wings 42 such that the socket 34 will be axially displaced (rearwardly), thereby bringing the lugs 24 of the guide sleeve 20 to axially tighten the template 12 against the pressure plate 46 on the other side thereof. Alternatively, instead of using wings to achieve the axial tightening, a pneumatic assembly can be used.

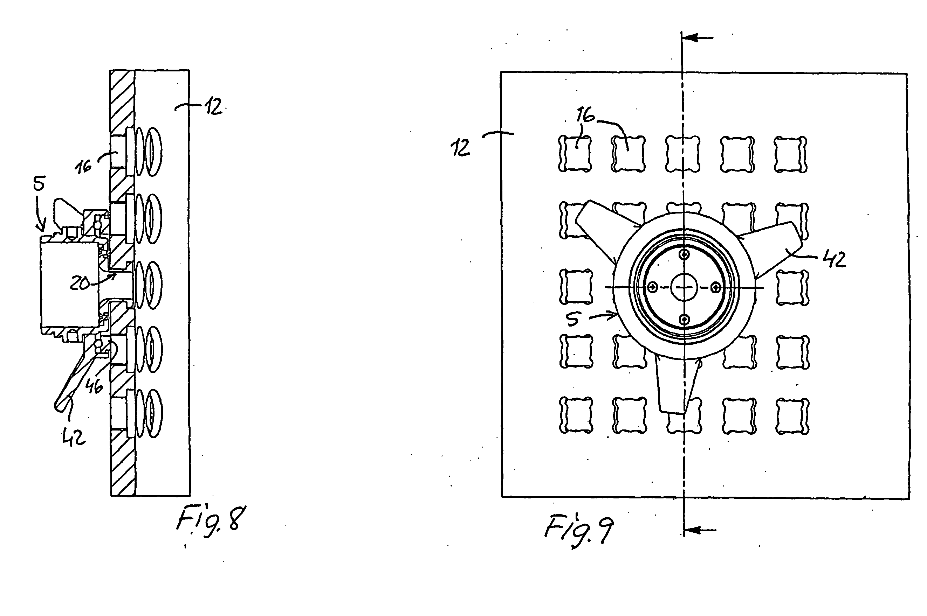

Fig. 8 and 9 further illustrate, in a side view and a plan view, respectively, a curved template 12 having a plurality of apertures 16 for the fixation of a drilling machine (not shown) by means of a fixation device 5, perpendicular to the surface of the template 12.

## Claims

1. A device for temporary fixation of a portable cutting machine (10) to a template (12) for making holes and/or recesses in a workpiece (14), comprising:
a guide sleeve (20) having a tubular hub (30) with an outer diameter corresponding to an inner diameter of an aperture (16) in the template (12), a forward end of the hub (30) having radially extending lugs (24) and a rearward end of the hub (30) being connected to a tubular adapter socket (34) to be mounted to a nose portion (38) of the cutting machine (10); and a tensioning unit (40, 42, 46, 48) mounted to the adapter socket (34) having a forward end surface for engagement with an outer surface of the template (12) **characterized in that** the lugs (24) are configured and located so as to match corresponding recesses ( 18) in the aperture (16) during insertion of the guide sleeve (20) therein and to obtain a locking engagement with an inner surface of the template (16) after a partial rotation of the guide sleeve (20) relative to the template (12), the tension unit is mounted to the adapter socket for axial displacement relative thereto.

2. The device according to claim 1, wherein the tensioning unit comprises a tensioning ring (40) axially movably attached to the adapter socket (43) by means of a screw thread joint, and a pressure plate (46) configured to rest against the outer surface of the template (12) and rotatably and axially supported relative to the tensioning ring (40) by means of an intermediate bearing (48) such that the pressure plate (46) can non-rotatably engage the outer surface of the template while allowing a rotary movement of the tensioning ring (40) relative to the adapter socket (43) and the pressure plate (46).

3. The device according to claim 1 or 2, wherein the hub (30) of the guide sleeve (20) is detachably connected to the adapter socket (43) by means of a base plate (32) and screw joints (36).

4. The device according to any one of claims 1-3, wherein the tensioning ring (40) is provided with wings (42) for turning the same relative to the adapter socket (34).

5. The device according to any one of claims 1-4, wherein the pressure plate (46) comprises at least three pressure elements which are individually articulated by ball joints so as to be automatically adjustable to an inclination of the outer surface of the template.

## Patentansprüche

1. Vorrichtung für eine zeitweilige Befestigung einer tragbaren Schneidemaschine (10) an einer Schablone (12) zum Herstellen von Löchern und/oder Ausnehmungen in einem Werkstück (14)
mit einer Führungsmanschette (20), welche eine röhrenförmige Nabe (30) mit einem Außendurchmesser aufweist, welcher dem Innendurchmesser einer Öffnung (16) in der Schablone (12) entspricht, wobei ein vorderes Ende der Nabe (30) sich radial erstreckende Ansätze (24) aufweist und wobei ein hinteres Ende der Nabe (30) mit einer röhrenförmigen Anpassungsmuffe (34) verbunden ist, welche an einem Vorsprung (38) der Schneidemaschine (10) befestigbar ist,
und mit einer Verspannungseinheit (40, 42, 46, 48), welche an der Anpassungsmuffe (34) befestigt ist, welche eine vorderseitige Abschlussoberfläche zum Eingriff mit einer äußeren Oberfläche der Schablone (12) aufweist,
**dadurch gekennzeichnet, dass**
die Ansätze (24) so gestaltet und angebracht sind, dass sie zu den zugehörigen Ausnehmungen (18) in der Öffnung (16) beim Einführen der Führungsmanschette (20) darein passen und damit ein blockierender Eingriff mit einer inneren Oberfläche der Schablone (16) nach einer partiellen Drehung der Führungsmanschette (20) bezüglich der Schablone (12) erfolgt, und die Verspannungseinheit an der Anpassungsmuffe für eine axiale Verschiebung relativ zu dieser angebracht ist.

2. Vorrichtung nach Anspruch 1, wobei die Verspannungseinheit einen Verspannungsring (40), welcher axial beweglich an der Anpassungsmuffe (43) mittels einer Gewindeverbindung angebracht ist, und eine Druckplatte (46) aufweist, welche so gestaltet ist, dass sie an der äußeren Oberfläche der Schablone (12) anliegt und mit Hilfe eines Zwischenlagers (48) drehbar und axial bezüglich des Verspannungsrings (43) gehalten wird, so dass die Druckplatte (46) ohne Drehung in die äußere Oberfläche der Schablone eingreifen kann, während eine Drehbewegung des Verspannungsrings (40) bezüglich der Anpassungsmuffe (43) und der Druckplatte (46) möglich ist.

3. Vorrichtung nach Ansprüchen 1 oder 2, wobei die Nabe (30) der Führungsmanschette (20) mit der Anpassungsmuffe (43) mittels einer Grundplatte (32) und Schraubverbindungen (36) lösbar verbunden ist.

4. Vorrichtung nach einem der Ansprüche 1-3, wobei der Verspannungsring (40) mit Flügeln (42) versehen ist, um diese bezüglich der Anpassungsmuffe (34) zu drehen.

5. Vorrichtung nach einem der Ansprüche 1-4, wobei die Druckplatte (46) wenigstens drei Druckelemente aufweist, welche einzeln durch Kugelgelenke gelagert sind, so dass sie automatisch auf eine Neigung der äußeren Oberfläche der Schablone einstellbar sind.

## Revendications

1. Dispositif pour la fixation temporaire d'une machine de coupe portable (10) sur un gabarit (12) pour faire des trous et/ou des évidements dans une pièce (14), comprenant :
un manchon de guidage (20) ayant un moyeu tubulaire (30) avec un diamètre externe correspondant à un diamètre interne d'une ouverture (16) dans le gabarit (12), une extrémité avant du moyeu (30) ayant des pattes (24) s'étendant de manière radiale et une extrémité arrière du moyeu (30) étant raccordée à une douille d'adaptateur tubulaire (34) destinée à être montée sur une partie de nez (38) de la machine de coupe (10) ;
et une unité de tension (40, 42, 46, 48) montée sur la douille d'adaptateur (34) ayant une surface d'extrémité avant pour la mise en prise avec une surface externe du gabarit (12),
**caractérisé en ce que** les pattes (24) sont configurées et positionnées pour correspondre aux évidements (18) correspondants dans l'ouverture (16) pendant l'insertion du manchon de guidage (20) à l'intérieur de cette dernière et obtenir une mise en prise de blocage avec une surface interne du gabarit (16) après une rotation partielle du manchon de guidage (20) par rapport au gabarit (12), l'unité de tension est montée sur la douille d'adaptateur pour le déplacement axial par rapport à cette dernière.

2. Dispositif selon la revendication 1, dans lequel l'unité de tension comprend une bague de tension (40) fixée de manière axialement mobile par rapport à la douille d'adaptateur (43) au moyen d'un joint fileté de vis, et une plaque de pression (46) configurée pour reposer contre la surface externe du gabarit (12) et supportée de manière rotative et axiale par rapport à la bague de tension (40) au moyen d'un palier intermédiaire (48) de sorte que la plaque de pression (46) peut mettre en prise de manière rotative la surface externe du gabarit tout en permettant un mouvement rotatif de la bague de tension (40) par rapport à la douille d'adaptateur (43) et à la plaque de pression (46).

3. Dispositif selon la revendication 1 ou 2, dans lequel le moyeu (30) du manchon de guidage (20) est raccordé de manière détachable à la douille d'adaptateur (43) au moyen d'une plaque de base (32) et de joints de vis (36).

4. Dispositif selon l'une quelconque des revendications 1 à 3, dans lequel la bague de tension (40) est prévue avec des ailes (42) pour faire tourner cette dernière par rapport à la douille d'adaptateur (34).

5. Dispositif selon l'une quelconque des revendications 1 à 4, dans lequel la plaque de pression (46) comprend au moins trois éléments de pression qui sont individuellement articulés par des joints sphériques afin d'être automatiquement ajustables par rapport à une inclinaison de la surface
externe du gabarit.
